# EUROPEAN PATENT APPLICATION

(11) **EP 4 486 045 A1**
(43) Date of publication of application: **01.01.2025**
(21) Application number: 23778037.4
(22) Date of filing: 24.03.2023
(51) Int. Cl.: H04W 74/02

(54) **DATA SENDING METHOD AND APPARATUS, DEVICE, STORAGE MEDIUM AND COMPUTER PROGRAM**

(30) Priority: 31.03.2022 CN 202210338071
(71) Applicant: Huawei Technologies Co., Ltd., Shenzhen, Guangdong 518129 (CN)
(72) Inventor: ZHOU, Xingwang, Shenzhen, Guangdong 518129 (CN); LI, Feng, Shenzhen, Guangdong 518129 (CN); LYU, Yunping, Shenzhen, Guangdong 518129 (CN); CHEN, Hao, Shenzhen, Guangdong 518129 (CN); YANG, Bo, Shenzhen, Guangdong 518129 (CN)
(74) Representative: Körber, Martin Hans
(86) International application number: PCT/CN2023/083628
(87) International publication number: WO 2023/185668

(57) **Abstract**

This application discloses a data sending method and apparatus, a device, a storage medium, and a computer program, and pertains to the field of communication technologies. The method includes: A first device obtains resource allocation information of a current access cycle, where the resource allocation information indicates start time and duration of a first period; when detecting, at first time, that a channel is idle, the first device starts to wait for first duration; and after the first duration ends, the first device sends first data over the channel, where the first data is data that needs to be sent by the first device in specific time. In this application, channel access time is divided into a plurality of access cycles, and each access cycle includes one reserved period. In this way, an AP may select the first period from a reserved period of the current access cycle, and allocate the first period to the first device, so that the first device can send deterministic data in the first period.

## Description

This application claims priority to Chinese Patent Application No. 202210338071.7, filed on March 31, 2022 and entitled "DATA SENDING METHOD AND APPARATUS, DEVICE, STORAGE MEDIUM, AND COMPUTER PROGRAM", which is incorporated herein by reference in its entirety.

### TECHNICAL FIELD

This application relates to the field of communication technologies, and in particular, to a data sending method and apparatus, a device, a storage medium, and a computer program.

### BACKGROUND

In a wireless local area network (wireless local area network, WLAN), data may be transmitted between each station (station, STA) and an access point (access point, AP) over a channel. When at least two STAs simultaneously send data over the channel, a data collision occurs on the channel, resulting in a data sending failure.

In a related technology, channel access time is divided into a contention free period (contention free period) and a contention period (contention period). In the contention free period, an AP sequentially sends a poll (poll) frame to all STAs through polling based on a centralized coordination mode (point coordination function, PCF), to avoid a data collision. To be specific, when a channel is idle, the AP sends the poll frame to a STA through polling, to query whether the STA needs to send data. If the STA needs to send the data, the STA is scheduled to send the data over the channel, and another STA does not send data. In the contention period, each STA freely contends for and preempts a channel based on a distributed coordination mode (distributed coordination function, DCF). To be specific, when a channel is idle, after waiting for a distributed interframe space (distributed interframe space, DIFS), each STA randomly determines backoff duration based on a backoff window corresponding to the STA, and performs countdown on the backoff duration of the STA. When countdown on backoff duration corresponding to a STA ends, the STA sends data over the channel.

However, in a process of sending data by using the foregoing method, in the contention free period, the AP needs to occupy the channel to send the poll frame to each STA, and therefore channel resources cannot be fully utilized. In addition, in the contention period, the backoff duration determined by each STA based on the backoff window is random. Therefore, whether each STA can preempt the channel is random. As a result, it cannot be ensured that the STA can send, in time, deterministic data, namely, data that needs to be sent by the STA in specific time.

### SUMMARY

Embodiments of this application provide a data sending method and apparatus, a device, a storage medium, and a computer program, to resolve a problem in a related technology that a STA cannot send deterministic data in time.

According to a first aspect, a data sending method is provided, applied to a wireless communication system. The wireless communication system includes one access point AP and at least one station STA, channel access time of the wireless communication system includes a plurality of access cycles, and each access cycle includes one reserved period. In the method, a first device obtains resource allocation information of a current access cycle, where the resource allocation information indicates start time and duration of a first period, the first period is a period allocated by the AP to the first device, the first period is in a reserved period of the current access cycle, and the first device is a device in the AP and the at least one STA. When detecting, at first time, that a channel is idle, the first device starts to wait for first duration, where the first time is determined based on a quantity of periods indicated by the resource allocation information and the start time of the first period. After the first duration ends, the first device sends first data over the channel, where the first data is data that needs to be sent by the first device in specific time.

The first device is a device that needs to send the first data at current time, the first data is the data that needs to be sent by the first device in the specific time, and the first data may also be referred to as deterministic data to be sent by the first device. To be specific, after data of a service currently running on the first device is generated, the first device needs to send, in the specific time, the data corresponding to the service. For example, the first device is a mobile phone, and a service currently running on the mobile phone is a call service. After receiving the first data, the mobile phone at a sending end needs to send the first data to a mobile phone at a receiving end over a channel in 10 ms. This can avoid that a delay in a call between the sending end and the receiving end affects normal running of the call service.

In this application, the first device may be the STA, or may be the AP. In different cases, processes in which the first device obtains the resource allocation information of the current access cycle are different. Therefore, the following two cases are separately described.

In a first case, the first device is the STA. In this case, the first device sends a resource allocation request to the AP, where the resource allocation request carries a feature of the first data. After receiving the resource allocation request sent by the STA, the AP allocates the first period to the STA in the reserved period of the current access cycle based on receiving time of the resource allocation request and the feature of the first data, and sends the resource allocation information to the STA. The STA receives the resource allocation information sent by the AP, to obtain the resource allocation information of the current access cycle.

In some embodiments, an implementation process in which the AP allocates the first period to the STA in the reserved period of the current access cycle based on the receiving time of the resource allocation request and the feature of the first data includes: The AP determines, as a candidate period, an unallocated reserved period that is in the current access cycle and that is after the receiving time of the resource allocation request, and then the AP determines, based on the feature of the first data and according to a related algorithm, sending duration occupied by the first data. If the sending duration is not greater than duration corresponding to the candidate period, the AP uses start time of the candidate period as the start time of the first period, and uses the sending duration as the duration of the first period, to allocate the first period to the STA in the reserved period of the current access cycle.

Optionally, if the sending duration is greater than duration corresponding to the candidate period, the AP determines start time of a next access cycle adjacent to the current access cycle, further uses the start time of the next access cycle as the start time of the first period, and uses the sending duration as the duration of the first period, to allocate the first period to the STA in a reserved period of the next access cycle.

In a second case, the first device is the AP. In this case, the AP determines, as a candidate period, an unallocated reserved period that is in the current access cycle and that is after current time, and determines, based on the feature of the first data and according to a related algorithm, sending duration occupied by the first data. Then, when the sending duration is not greater than duration corresponding to the candidate period, the AP uses start time of the candidate period as the start time of the first period, and uses, as the duration of the first period, the sending duration occupied by the first data, to allocate the first period to the AP in the reserved period of the current access cycle. The AP updates the resource allocation information after allocating the first period. In this way, the AP can obtain the resource allocation information of the current access cycle.

Optionally, when the sending duration is greater than duration corresponding to the candidate period, for a process in which the AP allocates the first period, refer to the related descriptions of the foregoing first case. Details are not described herein again.

In the foregoing two cases, after the AP allocates the first period to the first device, and obtains the resource allocation information of the current access cycle, the AP further needs to broadcast the resource allocation information of the current access cycle in time, so that another device can receive the resource allocation information of the current access cycle. In other words, after updating the resource allocation information of the current access cycle, the AP broadcasts updated resource allocation information in time. After receiving the resource allocation information of the current access cycle, the another device sends data over the channel strictly based on the resource allocation information of the current access cycle. Certainly, in actual application, alternatively, the AP may periodically broadcast the resource allocation information of the current access cycle, so that a STA that joins the wireless communication system for the first time can receive the resource allocation information of the current access cycle. Alternatively, when detecting that a new STA joins the wireless communication system, the AP directly sends the resource allocation information of the current access cycle to the new STA. After receiving the resource allocation information of the current access cycle sent by the AP, the new STA no longer preempts, based on the resource allocation information of the current access cycle, the channel to send data in a reserved period allocated in the current access cycle.

In a case in which a plurality of devices send data over the channel in the wireless communication system, when detecting, at start time of a period allocated by the AP to each device in the plurality of devices, that the channel is idle, the device starts to wait for the first duration. In a case in which only one device sends data over the channel in the wireless communication system, when detecting, at any time in the reserved period of the current access cycle, that the channel is idle, the device may start to wait for the first duration. The following uses an example in which the plurality of devices send the data over the channel in the wireless communication system for description.

In the wireless communication system, in a process in which the first device sends the data over the channel, a channel preemption parameter corresponding to each type of data needs to be followed. Because the first data is the deterministic data, when detecting, at the start time of the first period, that the channel is idle, the first device obtains the first duration from a target channel preemption parameter, and starts to wait for the first duration, where the target channel preemption parameter is a channel preemption parameter corresponding to the deterministic data.

When the first device is a STA in the at least one STA, the AP sends the target channel preemption parameter to the first device, and after receiving the target channel preemption parameter sent by the AP, when detecting, based on the first duration included in the target channel preemption parameter at the start time of the first period, that the channel is idle, the first device starts to wait for the first duration.

It should be noted that the target channel preemption parameter sent by the AP to the first device may be a redefined channel preemption parameter, or an existing channel preemption parameter that is reused. The existing channel preemption parameter is a parameter corresponding to existing data, and the existing data includes voice (voice) data, video (video) data, best-effort (best-effort) data, and background (background) data. Based on the foregoing descriptions, the first data is the data that needs to be sent by the first device in the specific time. If the first data is a type of existing data, the AP changes a channel preemption parameter corresponding to the existing data, to obtain a changed channel preemption parameter, and then sends the changed channel preemption parameter to the first device as the target channel preemption parameter. If the first data is other data than the existing data, the AP redefines a channel preemption parameter corresponding to the other data, to obtain a redefined channel preemption parameter, and further sends the redefined channel preemption parameter to the first device as the target channel preemption parameter.

Based on the foregoing descriptions, in addition to the deterministic data, the data sent by the first device over the channel may further include non-deterministic data. For the non-deterministic data, when the first device is a STA in the at least one STA, the AP sends a channel preemption parameter of the non-deterministic data to the first device. After receiving the channel preemption parameter that is of the non-deterministic data and that is sent by the AP, the first device preempts the channel based on the channel preemption parameter.

Based on the foregoing descriptions, the first data is the deterministic data. Data sent by devices in the at least one STA and the AP includes the deterministic data and the non-deterministic data. To be specific, the devices may send the deterministic data over the channel, or may send the non-deterministic data over the channel. For ease of description, the deterministic data is classified into scheduled (scheduled) deterministic data and un-scheduled (un-scheduled) deterministic data. When the first period is a period allocated by the AP to the first device, deterministic data sent by the first device in the first period is referred to as the scheduled deterministic data, and deterministic data sent by another device in the first period is referred to as the un-scheduled deterministic data.

In a process in which the first device sends the scheduled deterministic data over the channel, the AP and the another device in the at least one STA may continuously detect the channel, and when detecting that the channel is idle, send data over the channel. Certainly, in a process in which the another device sends the data over the channel, the first device may also continuously detect the channel, and when detecting that the channel is idle, send the data over the channel. A manner in which the another device detects the channel is the same as a manner in which the first device detects the channel. Therefore, the following uses the following steps (1) to (3) as an example to describe a manner in which the first device detects the channel and sends second data over the channel.
(1) When detecting, at second time, that the channel is idle, the first device starts to wait for second duration, where the second time is in a second period.

The second time may be start time of the second period, or the second time is any time after start time of the second period. To be specific, in a process in which a second device sends data over the channel, when detecting, at the start time of the second period, that the channel is idle, the first device starts to wait for the second duration. Alternatively, when detecting, at the any time after the start time of the second period, that the channel is idle, the first device starts to wait for the second duration.

The second period is a period allocated by the AP to the second device, the second period is in the reserved period of the current access cycle, and the second device is a device other than the first device in the AP and the at least one STA. In this case, the resource allocation information further indicates the start time and duration of the second period.

(2) After the second duration ends, the first device determines backoff duration, and starts timing of the backoff duration.

When the second data is the data that needs to be sent by the first device in the specific time, the first device determines the backoff duration based on a first backoff window; or when the second data is data that does not need to be sent by the first device in the specific time, the first device determines the backoff duration based on a second backoff window, where a maximum value of the first backoff window is less than a minimum value of the second backoff window.

In other words, when the second data is the deterministic data, the first device randomly selects an integer from integers included in the first backoff window as a first integer, and further uses a product of the first integer and basic backoff duration as first backoff duration of the first device. When the second data is the non-deterministic data, the first device randomly selects an integer from integers included in the second backoff window as a second integer, and further uses a product of the second integer and basic backoff duration as second backoff duration of the first device.

The backoff window is a discrete integer set, the backoff window includes a plurality of integers, and the plurality of integers are determined based on a quantity of data collisions. For a manner of determining the plurality of integers based on the quantity of data collisions, refer to a related algorithm. This is not limited in embodiments of this application.

There are a plurality of implementations in which a timer of the first device starts timing of the backoff duration. It is assumed that the backoff duration of the first device is 18 µs, and the timer of the first device may start timing from 0 µs, or may start to count down from 18 µs. Certainly, there may alternatively be another implementation in which timing of the backoff duration of the first device is started. This is not limited in embodiments of this application.

It should be noted that, in a process in which the timer of the first device times the backoff duration, the first device continuously detects whether the channel is idle. If the first device detects that the channel is not idle, the timer of the first device suspends timing. If the first device detects that the channel is idle, the timer of the first device resumes timing.

(3) When the timing of the backoff duration ends, but end time of the second period is not reached, the first device sends the second data over the channel.

If the timing of the backoff duration of the first device ends, but the end time of the second period is not reached, it indicates that there is an idle period in the second period. In this case, the first device may send the second data over the channel in the idle period, to fully use the reserved period included in the current access cycle, so as to avoid a waste of the reserved period.

That the idle period exists in the second period may include a plurality of cases. For example, after the second device sends the scheduled deterministic data over the channel, there is the idle period in the second period. In other words, the second device does not use up the second period allocated by the AP to the second device. For another example, the second device does not send the scheduled deterministic data over the channel. As a result, there is the idle period in the second period. In other words, the second device does not send the scheduled deterministic data in the second period.

In some embodiments, the reserved period of the current access cycle may further include a third period after the second period, the third period is a period allocated by the AP to a third device, and the third device is a device other than the first device and the second device in the AP and the at least one STA. To ensure that the third device can send data in the third period, before sending the second data over the channel, the first device further needs to determine the second data. To be specific, the first device determines remaining duration of the second period, where the remaining duration is duration from time at which the timing of the backoff duration of the first device ends to start time of the third period; and the first device determines the second data from to-be-sent data, where sending duration occupied by the second data is less than the remaining duration. Certainly, in actual application, the reserved period of the current access cycle may not include the third period after the second period. In this case, the first device does not need to determine the second data, and directly sends all to-be-sent data over the channel.

According to a second aspect, a data sending apparatus is provided. The data sending apparatus has a function of implementing behavior of the data sending method according to the first aspect. The data obtaining apparatus includes at least one module, and the at least one module is configured to implement the data sending method according to the first aspect.

According to a third aspect, a computer device is provided. The computer device includes a processor and a memory, and the memory is configured to store a computer program for performing the data sending method according to the first aspect. The processor is configured to execute the computer program stored in the memory, to implement the data sending method according to the first aspect.

Optionally, the computer device may further include a communication bus. The communication bus is configured to establish a connection between the processor and the memory.

According to a fourth aspect, a computer-readable storage medium is provided. The storage medium stores instructions, and when the instructions are run on a computer, the computer is enabled to perform steps of the data sending method according to the first aspect.

According to a fifth aspect, a computer program product including instructions is provided. When the instructions are run on a computer, the computer is enabled to perform steps of the data sending method according to the first aspect. In other words, a computer program is provided. When the computer program is run on a computer, the computer is enabled to perform steps of the data sending method according to the first aspect.

Technical effect achieved in the second aspect, the third aspect, the fourth aspect, and the fifth aspect is similar to that achieved by corresponding technical means in the first aspect. Details are not described again herein.

A technical solution provided in this application includes at least the following beneficial effect:

The channel access time is divided into the plurality of access cycles, and each access cycle includes one reserved period. In this way, the AP may select the first period from the reserved period of the current access cycle, and allocate the first period to the first device, so that the first device can send the data in the first period. In addition, because the resource allocation information indicates the start time of the first period, after obtaining the resource allocation information, the first device may start to wait for the first duration at the first time, and after the waiting for the first duration, directly send the first data over the channel without randomly determining the backoff duration based on the backoff window corresponding to the first device. In this way, it can be ensured that the first device can send, over the channel in time, the data that needs to be sent in the specific time, namely, the deterministic data.

### BRIEF DESCRIPTION OF DRAWINGS

FIG. 1 is a diagram of a system architecture according to an embodiment of this application;
FIG. 2 is a diagram of division into channel access time according to an embodiment of this application;
FIG. 3 is a flowchart of a data sending method according to an embodiment of this application;
FIG. 4 is a first diagram in which a first device sends data according to an embodiment of this application;
FIG. 5 is a second diagram in which a first device sends data according to an embodiment of this application;
FIG. 6 is a third diagram in which a first device sends data according to an embodiment of this application;
FIG. 7 is a first diagram of data sending according to an embodiment of this application;
FIG. 8 is a second diagram of data sending according to an embodiment of this application;
FIG. 9 is a third diagram of data sending according to an embodiment of this application;
FIG. 10 is a fourth diagram of data sending according to an embodiment of this application;
FIG. 11 is a diagram of a structure of a data sending apparatus according to an embodiment of this application;
FIG. 12 is a diagram of a structure of a computer device according to an embodiment of this application; and
FIG. 13 is a diagram of a structure of a network device according to an embodiment of this application.

### DESCRIPTION OF EMBODIMENTS

To make objectives, technical solutions, and advantages of this application clearer, the following further describes implementations of this application in detail with reference to accompanying drawings.

Before the method provided in embodiments of this application is explained and described in detail, a system architecture provided in embodiments of this application is first described.

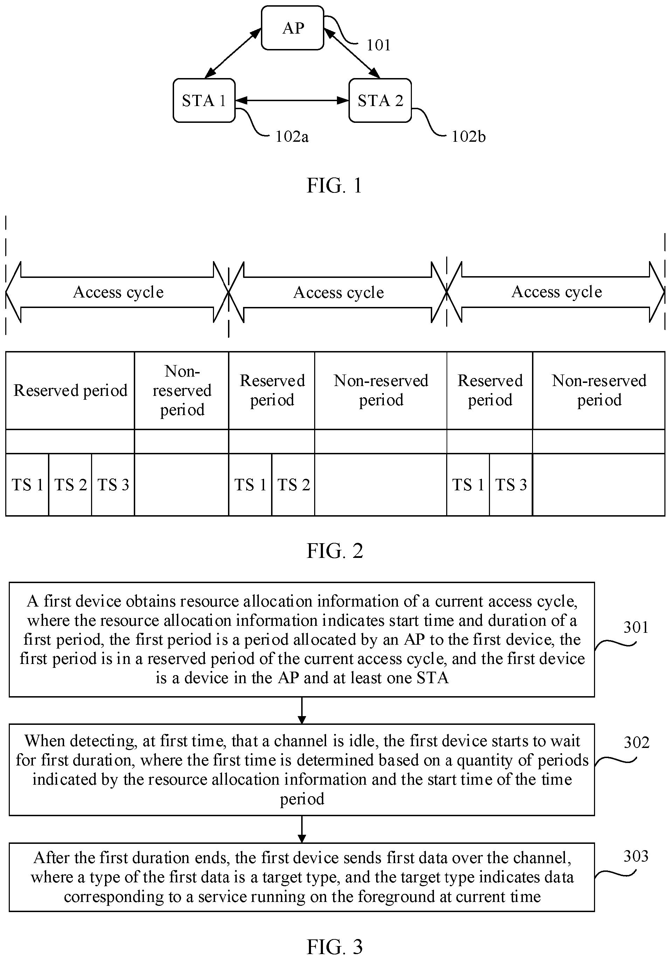

FIG. 1 is a diagram of a system architecture according to an example embodiment. The system includes one AP 101 and at least one STA 102. In FIG. 1, an example in which the system includes one AP 101 and two STAs 102 (namely, a STA 102a and a STA 102b in FIG. 1) is used for description. The AP 101 interacts with the STA 102 in a wireless communication manner.

When the STA 102a communicates with the STA 102b, the STA 102a and the STA 102b separately transmit data to the AP 101 over a channel. In this case, the STA 102a sends the data to the AP 101 over the channel. After receiving the data, the AP 101 sends the data to the STA 102b over the channel. Alternatively, the STA 102b sends the data to the AP 101 over the channel, and after receiving the data, the AP 101 sends the data to the STA 102a over the channel. Optionally, the data may alternatively be directly transmitted between the STA 102a and the STA 102b over the channel. In this case, the STA 102a directly sends the data to the STA 102b over the channel. Alternatively, the STA 102b directly sends the data to the STA 102a over the channel.

The AP 101, the STA 102a, and the STA 102b may all send, over the channel, data that needs to be sent by the AP 101, the STA 102a, and the STA 102b in specific time, or may send, over the channel, data that does not need to be sent by the AP 101, the STA 102a, and the STA 102b in specific time. In some embodiments, the data that needs to be sent in the specific time may be referred to as deterministic data, and the data that does not need to be sent in the specific time may be referred to as non-deterministic data or common data. To be specific, the AP 101, the STA 102a, and the STA 102b may send the deterministic data over the channel, or may send the non-deterministic data over the channel.

In a related technology, the AP 101, the STA 102a, and the STA 102b freely contend for and preempt the channel, and send the deterministic data and the non-deterministic data corresponding to the AP 101, the STA 102a, and the STA 102b. Because whether the AP 101, the STA 102a, and the STA 102b can preempt the channel is random, it cannot be ensured that the AP 101, the STA 102a, and the STA 102b can send, in time, the deterministic data corresponding to the AP 101, the STA 102a, and the STA 102b. Therefore, in this embodiment of this application, refer to FIG. 2. The AP 101 divides channel access time into a plurality of access cycles, and the access cycle may also be referred to as a service interval (service interval). Duration of each access cycle may be the same or different, and each access cycle includes a reserved period (reserve period) and a non-reserved period (non-reserve period). FIG. 2 is described by using an example in which the AP 101 divides the channel access time into three access cycles. In the reserved period, the AP 101 allocates a period to the AP 101 or the STA 102, and the period may also be referred to as a timeslot (timeslot, TS), so that the AP 101 or the STA 102 can preferably send, in the period, the deterministic data corresponding to the AP 101 or the STA 102. In the non-reserved period, the AP 101 or the STA 102 freely contends for and preempts the channel, and sends, over the channel, the non-deterministic data corresponding to the AP 101 or the STA 102.

The AP 101 is an access point in a WLAN, and may be a router. The STA 102 is a station in the WLAN, for example, a personal computer (personal computer, PC), a mobile phone, a smartphone, a personal digital assistant (personal digital assistant, PDA), a pocket personal computer (pocket pc, PPC), a tablet computer, or a smart television.

FIG. 3 is a flowchart of a data sending method according to an embodiment of this application. Refer to FIG. 3. The method includes the following steps.

Step 301: A first device obtains resource allocation information of a current access cycle, where the resource allocation information indicates start time and duration of a first period, the first period is a period allocated by an AP to the first device, the first period is in a reserved period of the current access cycle, and the first device is a device in the AP and at least one STA.

The first device is a device that needs to send first data at current time, the first data is data that needs to be sent by the first device in specific time, and the first data may also be referred to as deterministic data to be sent by the first device. To be specific, after data of a service currently running on the first device is generated, the first device needs to send, in the specific time, the data corresponding to the service. For example, the first device is a mobile phone, and a service currently running on the mobile phone is a call service. After obtaining call content of a user, the mobile phone needs to send the call content to a peer mobile phone over a channel in 10 ms, that is, the call content between users is the deterministic data. This can avoid that a delay in a call between calling and called parties affects normal running of the call service.

In this embodiment of this application, the first device may be the STA, or may be the AP. In different cases, processes in which the first device obtains the resource allocation information of the current access cycle are different. Therefore, the following two cases are separately described.

In a first case, the first device is the STA. In this case, the first device sends a resource allocation request to the AP, where the resource allocation request carries a feature of the first data. After receiving the resource allocation request sent by the STA, the AP allocates the first period to the STA in the reserved period of the current access cycle based on receiving time of the resource allocation request and the feature of the first data, and sends the resource allocation information to the STA. The STA receives the resource allocation information sent by the AP, to obtain the resource allocation information of the current access cycle.

In some embodiments, an implementation process in which the AP allocates the first period to the STA in the reserved period of the current access cycle based on the receiving time of the resource allocation request and the feature of the first data includes: The AP determines, as a candidate period, an unallocated reserved period that is in the current access cycle and that is after the receiving time of the resource allocation request, and then the AP determines, based on the feature of the first data and according to a related algorithm, sending duration occupied by the first data. If the sending duration is not greater than duration corresponding to the candidate period, the AP uses start time of the candidate period as the start time of the first period, and uses the sending duration as the duration of the first period, to allocate the first period to the STA in the reserved period of the current access cycle.

Optionally, if the sending duration is greater than duration corresponding to the candidate period, the AP determines start time of a next access cycle adjacent to the current access cycle, further uses the start time of the next access cycle as the start time of the first period, and uses the sending duration as the duration of the first period, to allocate the first period to the STA in a reserved period of the next access cycle.

In a second case, the first device is the AP. In this case, the AP determines, as a candidate period, an unallocated reserved period that is in the current access cycle and that is after current time, and determines, based on the feature of the first data and according to a related algorithm, sending duration occupied by the first data. Then, when the sending duration is not greater than duration corresponding to the candidate period, the AP uses start time of the candidate period as the start time of the first period, and uses, as the duration of the first period, the sending duration occupied by the first data, to allocate the first period to the AP in the reserved period of the current access cycle. The AP updates the resource allocation information after allocating the first period. In this way, the AP can obtain the resource allocation information of the current access cycle.

Optionally, when the sending duration is greater than duration corresponding to the candidate period, for a process in which the AP allocates the first period, refer to the related descriptions of the foregoing first case. Details are not described herein again.

In the foregoing two cases, after the AP allocates the first period to the first device, and obtains the resource allocation information of the current access cycle, the AP further needs to broadcast the resource allocation information of the current access cycle in time, so that another device can receive the resource allocation information of the current access cycle. In other words, after updating the resource allocation information of the current access cycle, the AP broadcasts updated resource allocation information in time. After receiving the resource allocation information of the current access cycle, the another device sends data over the channel strictly based on the resource allocation information of the current access cycle. Certainly, in actual application, alternatively, the AP may periodically broadcast the resource allocation information of the current access cycle, so that a STA that joins a wireless communication system for the first time can receive the resource allocation information of the current access cycle. Alternatively, when detecting that a new STA joins the wireless communication system, the AP directly sends the resource allocation information of the current access cycle to the new STA. After receiving the resource allocation information of the current access cycle sent by the AP, the new STA no longer preempts, based on the resource allocation information of the current access cycle, the channel to send data in a reserved period allocated in the current access cycle.

It should be noted that, when the first device is the AP, the AP may further receive a resource allocation request sent by a first STA, and further allocate a period to the first STA in the reserved period of the current access cycle, where the first STA is a STA in the at least one STA. To be specific, the first STA sends the resource allocation request to the AP, where the resource allocation request carries a feature of third data, the third data is data to be sent by the first STA, and the third data is data that needs to be sent by the first STA in specific time. After receiving the resource allocation request sent by the first STA, the AP allocates the period to the first STA in the reserved period of the current access cycle based on receiving time of the resource allocation request and the feature of the third data. Then, the AP sends the resource allocation information to the first STA, where the resource allocation information indicates start time and duration of the period allocated by the AP to the first STA.

The feature of the first data indicates a size of the data to be sent by the first device, and the feature of the first data includes a delay bound (delay bound), a MAC service data unit size (MAC service data unit size, MSDU size), and the like. Certainly, in actual application, the feature of the first data may further include other information. This is not limited in embodiments of this application.

Based on the foregoing descriptions, the AP divides channel access time into a plurality of access cycles, and the current access cycle is an access cycle at the current time.

It should be noted that, in the foregoing descriptions, an example in which the reserved period of the current access cycle includes only one period is used. In this case, the resource allocation information indicates start time and duration of the period. In an actual application process, the reserved period of the current access cycle may further include a plurality of periods. In this case, the resource allocation information indicates start time and duration of each period in the plurality of periods. A quantity of periods included in the reserved period of the current access cycle is related to a quantity of devices to which periods are allocated by the AP in the reserved period of the current access cycle. To be specific, if the AP allocates a period to only one device in the reserved period of the current access cycle, the reserved period of the current access cycle includes only one period. If the AP allocates periods to a plurality of devices in the reserved period of the current access cycle, the reserved period of the current access cycle includes a plurality of periods.

Optionally, the resource allocation information includes start time and duration of a period allocated by the AP to each device, and an identifier of the device that is scheduled in each period. Certainly, the resource allocation information may further include other information, for example, an identifier of a device that is not scheduled in each period. This is not limited in embodiments of this application. A device that is scheduled in a period is a device to which the period is allocated, and a device that is not scheduled in a period is a device to which the period is not allocated. For example, if the AP allocates the first period to the first device, in the first period, the first device is the device that is scheduled, and another device is a device that is not scheduled.

Step 302: When detecting, at first time, that a channel is idle, the first device starts to wait for first duration, where the first time is determined based on a quantity of periods indicated by the resource allocation information and the start time of the first period.

In some embodiments, a plurality of devices may send data over the channel in the wireless communication system, and the plurality of devices include the first device, or only the first device may send the data over the channel. In different cases, first time determined by the first device based on the quantity of periods indicated by the resource allocation information and the start time of the first period is different. Therefore, the following two cases are separately described.

In a first case, the plurality of devices send the data over the channel in the wireless communication system, and the plurality of devices include the first device. In this case, the AP allocates a period to each device in the plurality of devices, and broadcasts the resource allocation information, where the quantity of periods indicated by the resource allocation information is not 1. After the first device receives the resource allocation information broadcast by the AP, to ensure that the first device can send the deterministic data in time, when detecting, at the start time of the first period, that the channel is idle, the first device starts to wait for the first duration. In other words, the first time is the start time of the first period.

In a second case, only the first device sends the data over the channel in the wireless communication system. In this case, the AP allocates the first period only to the first device, and sends the resource allocation information to the first device, where the quantity of periods indicated by the resource allocation information is 1. After the first device receives the resource allocation information sent by the AP, when detecting, at any time in the reserved period to which the first period belongs, that the channel is idle, the first device starts to wait for the first duration. In other words, the first time is the any time in the reserved period to which the first period belongs.

To be specific, in a case in which a plurality of devices send the data over the channel in the wireless communication system, when detecting, at start time of the period allocated by the AP to each device in the plurality of devices, that the channel is idle, the device starts to wait for the first duration. In a case in which only one device sends data over the channel in the wireless communication system, when detecting, at the any time in the reserved period of the current access cycle, that the channel is idle, the device may start to wait for the first duration. The following uses an example in which the plurality of devices send the data over the channel in the wireless communication system for description.

In the wireless communication system, in a process in which the first device sends the data over the channel, a channel preemption parameter corresponding to each type of data needs to be followed. Because the first data is the deterministic data, when detecting, at the start time of the first period, that the channel is idle, the first device obtains the first duration from a target channel preemption parameter, and starts to wait for the first duration, where the target channel preemption parameter is a channel preemption parameter corresponding to the deterministic data.

When the first device is a STA in the at least one STA, the AP sends the target channel preemption parameter to the first device, and after receiving the target channel preemption parameter sent by the AP, when detecting, based on the first duration included in the target channel preemption parameter at the start time of the first period, that the channel is idle, the first device starts to wait for the first duration.

The target channel preemption parameter includes the first duration, second duration, and a minimum value and a maximum value of a first backoff window. The first duration indicates waiting duration for sending the deterministic data by the first device in the first period. To be specific, after the first duration ends in the first period, the first device may send, over the channel, the deterministic data corresponding to the first device. The second duration indicates waiting duration for entering the backoff window by the first device in another period. To be specific, after the second duration ends in the another period, the first device may enter the backoff window. The second duration is greater than the first duration. For example, the first duration is a centralized interframe space (point interframe space, PIFS), and the second duration is a DIFS.

It should be noted that the target channel preemption parameter sent by the AP to the first device may be a redefined channel preemption parameter, or an existing channel preemption parameter that is reused. The existing channel preemption parameter is a parameter corresponding to existing data, and the existing data includes voice data, video data, best-effort data, and background data. Based on the foregoing descriptions, the first data is the data that needs to be sent by the first device in the specific time. If the first data is a type of existing data, the AP changes a channel preemption parameter corresponding to the existing data, to obtain a changed channel preemption parameter, and then sends the changed channel preemption parameter to the first device as the target channel preemption parameter. If the first data is other data than the existing data, the AP redefines a channel preemption parameter corresponding to the other data, to obtain a redefined channel preemption parameter, and further sends the redefined channel preemption parameter to the first device as the target channel preemption parameter.

Based on the foregoing descriptions, in addition to the deterministic data, the data sent by the first device over the channel may further include non-deterministic data. For the non-deterministic data, when the first device is a STA in the at least one STA, the AP sends a channel preemption parameter of the non-deterministic data to the first device. After receiving the channel preemption parameter that is of the non-deterministic data and that is sent by the AP, the first device preempts the channel based on the channel preemption parameter.

Step 303: After the first duration ends, the first device sends the first data over the channel.

Based on the foregoing descriptions, the first data is the deterministic data. Data sent by devices in the at least one STA and the AP includes the deterministic data and the non-deterministic data. To be specific, the devices may send the deterministic data over the channel, or may send the non-deterministic data over the channel. For ease of description, the deterministic data is classified into scheduled deterministic data and un-scheduled deterministic data. When the first period is the period allocated by the AP to the first device, deterministic data sent by the first device in the first period is referred to as the scheduled deterministic data, and deterministic data sent by another device in the first period is referred to as the un-scheduled deterministic data.

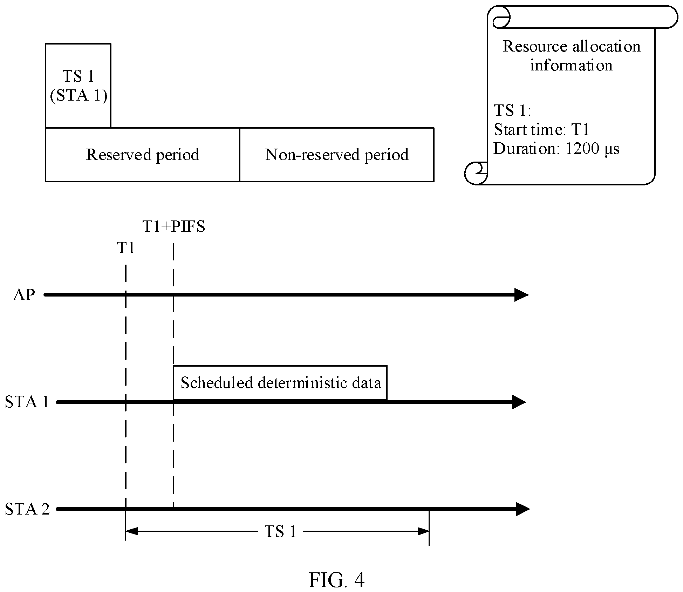

For example, FIG. 4 is a first diagram in which a first device sends data according to an embodiment of this application. In FIG. 4, a period allocated by an AP to a STA 1 is a TS 1, start time of the TS 1 is T1, duration of the TS 1 is 1200 µs, and first duration is a PIPS. When detecting, at the start time (namely, a moment T1) of the TS 1, that a channel is idle, the STA 1 starts to wait for the PIFS. After waiting for the PIFS ends, the STA 1 sends scheduled deterministic data over the channel at a moment T1+PIFS.

In a process in which the first device sends the scheduled deterministic data over the channel, the AP and another device in the at least one STA may continuously detect the channel, and when detecting that the channel is idle, send data over the channel. Certainly, in a process in which the another device sends the data over the channel, the first device may also continuously detect the channel, and when detecting that the channel is idle, send the data over the channel. A manner in which the another device detects the channel is the same as a manner in which the first device detects the channel. Therefore, the following uses the following steps (1) to (3) as an example to describe a manner in which the first device detects the channel and sends second data over the channel.
(1) When detecting, at second time, that the channel is idle, the first device starts to wait for second duration, where the second time is in a second period.

The second time may be start time of the second period, or the second time is any time after start time of the second period. To be specific, in a process in which a second device sends data over the channel, when detecting, at the start time of the second period, that the channel is idle, the first device starts to wait for the second duration. Alternatively, when detecting, at the any time after the start time of the second period, that the channel is idle, the first device starts to wait for the second duration.

Based on the foregoing descriptions, the target channel preemption parameter includes the first duration, the second duration, and the minimum value and the maximum value of the first backoff window. In this way, after receiving the target channel preemption parameter sent by the AP, when detecting, based on the second duration included in the target channel preemption parameter at the second time, that the channel is idle, the first device may start to wait for the second duration.

The second period is a period allocated by the AP to the second device, the second period is in the reserved period of the current access cycle, and the second device is a device other than the first device in the AP and the at least one STA. In this case, the resource allocation information further indicates the start time and duration of the second period.

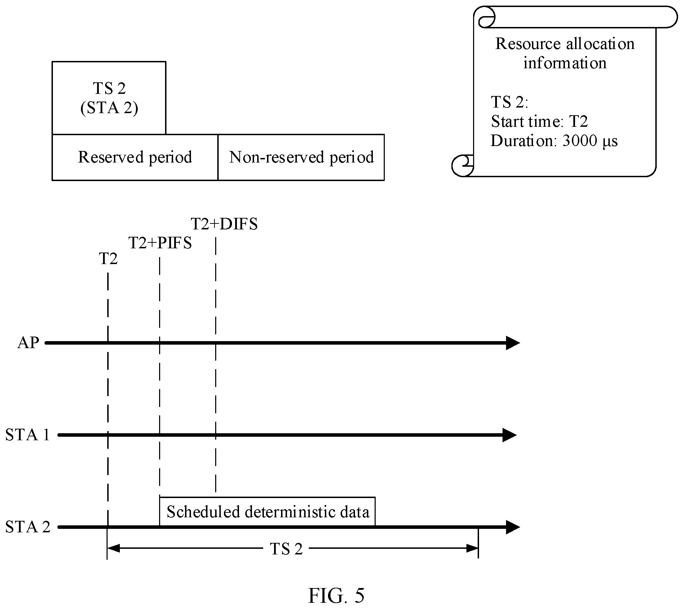

For example, FIG. 5 is a second diagram in which the first device sends the data according to this embodiment of this application. In FIG. 5, the first device is the STA 1, the second device is a STA 2, the period allocated by the AP to the STA 2 is a TS 2, start time of the TS 2 is T2, duration of the TS 2 is 3000 µs, and the second duration is a DIFS. When detecting, at the start time (namely, a moment T2) of the TS 2, that the channel is idle, the STA 1 starts to wait for the DIFS.

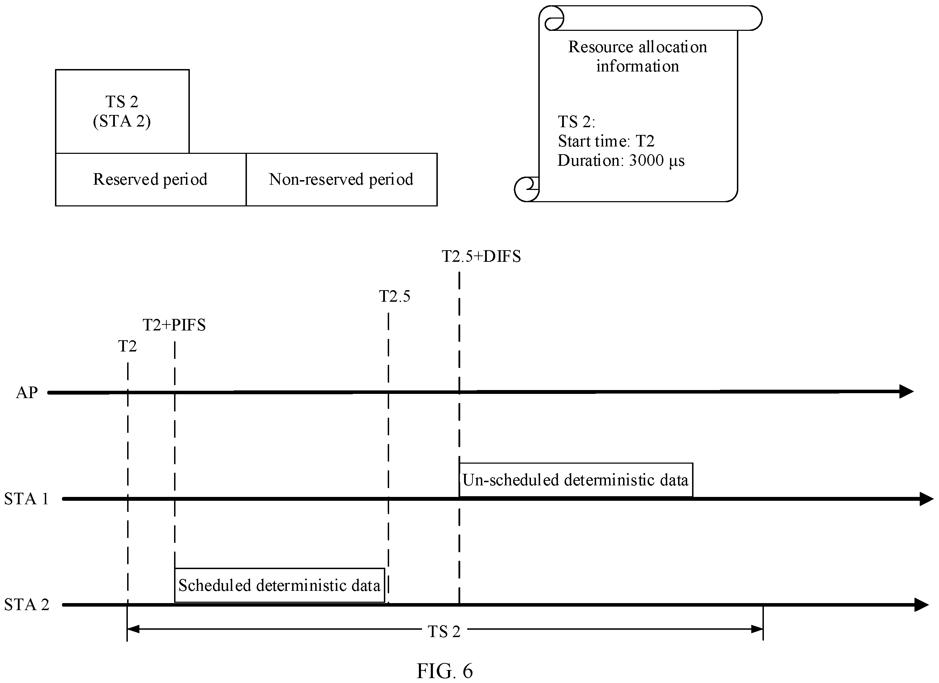

For another example, FIG. 6 is a third diagram in which the first device sends the data according to this embodiment of this application. In FIG. 6, the first device is the STA 1, the second device is the STA 2, the period allocated by the AP to the STA 2 is the TS 2, the start time of the TS 2 is the T2, the duration of the TS 2 is 3000 µs, and the second duration is the DIFS. When detecting, at time T2.5 after the start time (namely, the moment T2) of the TS 2, that the channel is idle, the STA 1 starts to wait for the DIFS.

(2) After the second duration ends, the first device determines backoff duration, and starts timing of the backoff duration.

When the second data is the data that needs to be sent by the first device in the specific time, the first device determines the backoff duration based on a first backoff window; or when the second data is data that does not need to be sent by the first device in the specific time, the first device determines the backoff duration based on a second backoff window, where a maximum value of the first backoff window is less than a minimum value of the second backoff window.

In other words, when the second data is the deterministic data, the first device randomly selects an integer from integers included in the first backoff window as a first integer, and further uses a product of the first integer and basic backoff duration as first backoff duration of the first device. When the second data is non-deterministic data, the first device randomly selects an integer from integers included in the second backoff window as a second integer, and further uses a product of the second integer and basic backoff duration as second backoff duration of the first device.

The backoff window is a discrete integer set, the backoff window includes a plurality of integers, and the plurality of integers are determined based on a quantity of data collisions. For a manner of determining the plurality of integers based on the quantity of data collisions, refer to a related algorithm. This is not limited in embodiments of this application.

Based on the foregoing descriptions, one type of data corresponds to one group of channel preemption parameters, and the channel preemption parameter includes the minimum value and the maximum value of the backoff window. The backoff window may be updated based on the quantity of data collisions, that is, the plurality of integers included in the backoff window change with the quantity of data collisions. However, data is not retransmitted endlessly, and the plurality of integers included in the backoff window are located between the minimum value and the maximum value of the backoff window. In other words, a minimum integer in the plurality of integers is not less than the minimum value of the backoff window, and a maximum integer in the plurality of integers is not greater than the maximum value of the backoff window. Therefore, for the first device, the first device may determine, based on the maximum value and the minimum value of the first backoff window that are included in the target channel preemption parameter and a quantity of collisions of the deterministic data sent by the first device, the integer included in the first backoff window. In addition, when the second data is the data that does not need to be sent by the first device in the specific time, the first device may further determine, based on a maximum value and the minimum value of the second backoff window that are included in a channel preemption parameter corresponding to the second data and a quantity of collisions of the second data, the integer included in the second backoff window.

Because the maximum value of the first backoff window is less than the minimum value of the second backoff window, the first backoff duration is less than the second backoff duration. In this way, it can be ensured that the first device first sends the deterministic data over the channel, to ensure normal running of a current service of the first device. Certainly, in actual application, the first backoff window and the second backoff window may alternatively be the same. Because the first device randomly selects the integers from the first backoff window and the second backoff window, the first backoff duration may be equal to the second backoff duration, the first backoff duration may be greater than the second backoff duration, or the first backoff duration may be less than the second backoff duration.

The basic backoff duration is preset. In addition, the basic backoff duration may be further adjusted based on different requirements. For example, the basic backoff duration may be 20 µs, or the basic backoff duration may be 9 µs. For ease of description, the basic backoff duration is denoted as t.

That the first device determines the first backoff duration and the second backoff duration in the foregoing manner is an example. In some other embodiments, the first device may alternatively determine the first backoff duration and the second backoff duration in another manner. For example, the backoff window includes the backoff duration, and the first device directly randomly selects, as the first backoff duration, backoff duration from the backoff duration included in the first backoff window. The first device directly randomly selects, as the second backoff duration, backoff duration from the backoff duration included in the second backoff window.

There are a plurality of implementations in which a timer of the first device starts timing of the backoff duration. It is assumed that the backoff duration of the first device is 18 µs, and the timer of the first device may start timing from 0 µs, or may start to count down from 18 µs. Certainly, there may alternatively be another implementation in which timing of the backoff duration of the first device is started. This is not limited in embodiments of this application.

It should be noted that, in a process in which the timer of the first device times the backoff duration, the first device continuously detects whether the channel is idle. If the first device detects that the channel is not idle, the timer of the first device suspends timing. If the first device detects that the channel is idle, the timer of the first device resumes timing.

(3) When the timing of the backoff duration ends, but end time of the second period is not reached, the first device sends the second data over the channel.

If the timing of the backoff duration of the first device ends, but the end time of the second period is not reached, it indicates that there is an idle period in the second period. In this case, the first device may send the second data over the channel in the idle period, to fully use the reserved period included in the current access cycle, so as to avoid a waste of the reserved period.

That the idle period exists in the second period may include a plurality of cases. For example, after the second device sends the scheduled deterministic data over the channel, there is the idle period in the second period. In other words, the second device does not use up the second period allocated by the AP to the second device. For another example, the second device does not send the scheduled deterministic data over the channel. As a result, there is the idle period in the second period. In other words, the second device does not send the scheduled deterministic data in the second period.

Based on the foregoing descriptions, it is assumed that the backoff duration of the first device is 18 µs. If the timer of the first device starts timing from 0 µs, when the timer of the first device is 18 µs, it indicates that the timing of the backoff duration of the first device ends. If the timer of the first device starts to count down from 18 µs, when the timer of the first device is 0 µs, it indicates that the timing of the backoff duration of the first device ends.

In some embodiments, the reserved period of the current access cycle may further include a third period after the second period, the third period is a period allocated by the AP to a third device, and the third device is a device other than the first device and the second device in the AP and the at least one STA. To ensure that the third device can send data in the third period, before sending the second data over the channel, the first device further needs to determine the second data. To be specific, the first device determines remaining duration of the second period, where the remaining duration is duration from time at which the timing of the backoff duration of the first device ends to start time of the third period; and the first device determines the second data from to-be-sent data, where sending duration occupied by the second data is less than the remaining duration. Certainly, in actual application, the reserved period of the current access cycle may not include the third period after the second period. In this case, the first device does not need to determine the second data, and directly sends all to-be-sent data over the channel.

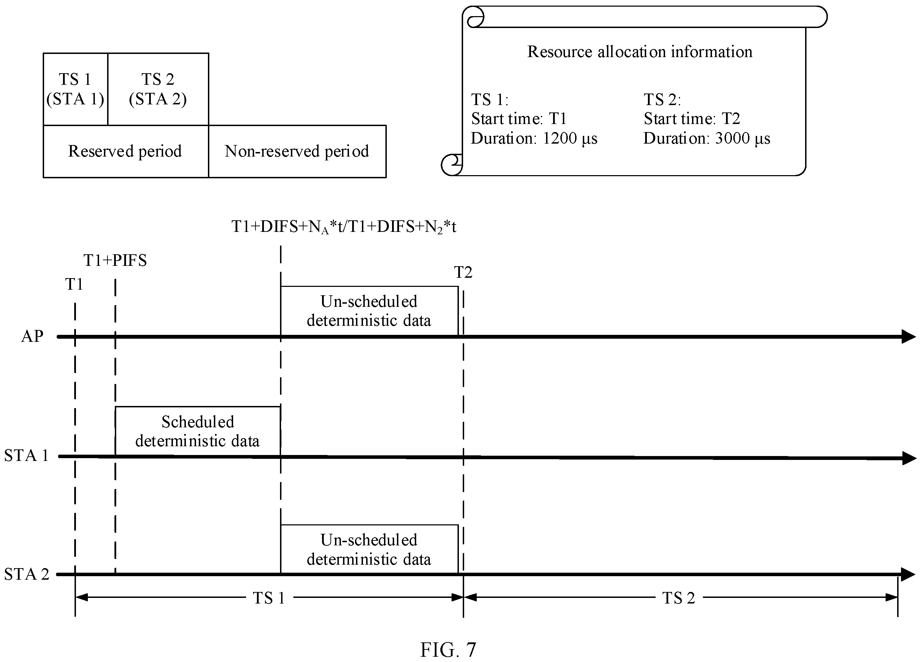

The following uses FIG. 7 to FIG. 10 as an example to describe the data sending method provided in embodiments of this application. In FIG. 7 to FIG. 10, an AP allocates a TS 1 to a STA 1, start time of the TS 1 is T1, and duration of the TS 1 is 1200 µs. The AP allocates a TS 2 to a STA 2, start time of the TS 2 is T2, and duration of the TS 2 is 3000 µs. In the TS 1, a priority of deterministic data of the STA 1 is the highest, priorities of deterministic data of the AP and the STA 2 are the second highest, and priorities of non-deterministic data of the AP, the STA 1, and the STA 2 are the lowest. In the TS 2, the priority of the deterministic data of the STA 2 is the highest, the priorities of the deterministic data of the AP and the STA 1 are the second highest, and the priorities of the non-deterministic data of the AP, the STA 1, and the STA 2 are the lowest.

When detecting, at the start time (namely, a moment T1) of the TS 1, that a channel is idle, the STA 1 starts to wait for a PIFS. After waiting for the PIFS ends, the STA 1 sends, over the channel at a moment T1+PIFS, scheduled deterministic data corresponding to the STA 1. When detecting, at the start time T1 of the TS 1, that the channel is idle, the AP and the STA 2 start to wait for a DIFS. After waiting for the DIFS ends, the AP and the STA 2 separately determine backoff duration of the AP and backoff duration of the STA2 based on a first backoff window. For ease of description, the backoff duration of the AP is denoted as NA*t, and the backoff duration of the STA 2 is denoted as N2*t.

It is assumed that, as shown in FIG. 7, the backoff duration of the AP is equal to the backoff duration of the STA 2. To be specific, the AP and the STA 2 simultaneously preempt the channel, and simultaneously send, over the channel, un-scheduled deterministic data corresponding to the AP and the STA 2. The un-scheduled deterministic data corresponding to the AP collides with the un-scheduled deterministic data corresponding to the STA 2 on the channel, resulting in a data sending failure. In this case, the first backoff window is updated, to obtain an updated first backoff window, and the AP and the STA 2 separately re-determine the backoff duration of the AP and the backoff duration of the STA 2 based on the updated first backoff window. Then, the AP and the STA 2 continue to detect the channel, and when detecting that the channel is idle, send, over the channel, the un-scheduled deterministic data corresponding to the AP and the STA 2.

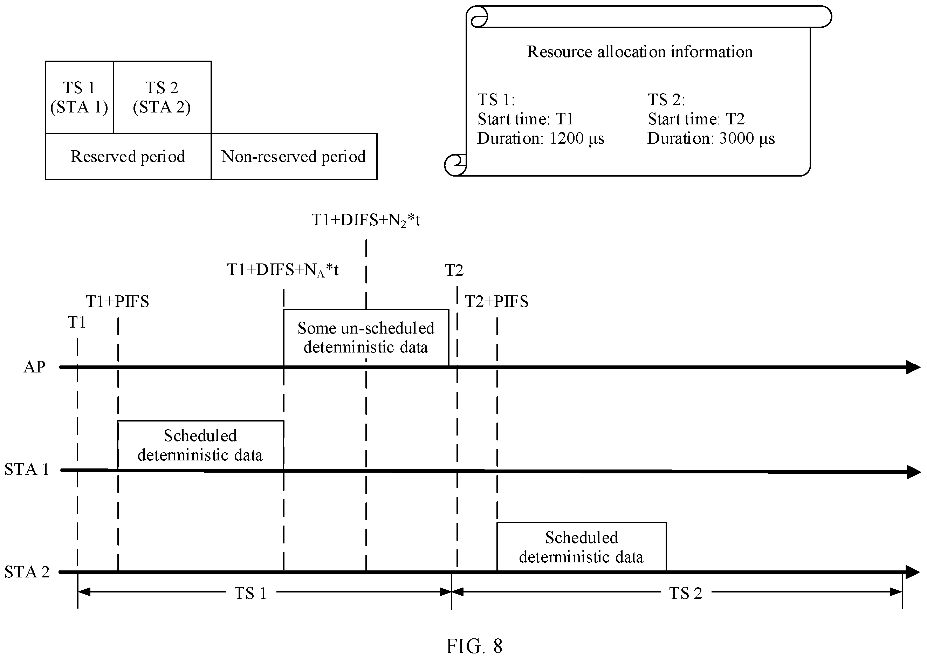

It is assumed that, as shown in FIG. 8, the backoff duration of the AP is less than the backoff duration of the STA2. To be specific, the AP preempts the channel. Because the TS 2 after the TS 1 is allocated by the AP to the STA 2, to ensure that the STA 2 can send scheduled deterministic data corresponding to the STA 2 in the TS 2, the AP needs to determine duration from time at which timing of the backoff duration of the AP ends to the start time (namely, a moment T2) of the TS 2. For example, if the AP determines that the duration from the time at which the timing of the backoff duration of the AP ends to the T2 is 500 µs, the AP selects some un-scheduled deterministic data from all un-scheduled deterministic data corresponding to the AP, and sends the some un-scheduled deterministic data over the channel, where sending duration occupied by the some un-scheduled deterministic data is less than 500 µs. Then, when detecting, at the start time (namely, the moment T2) of the TS 2, that the channel is idle, the STA 2 starts to wait for the PIFS. After waiting for the PIFS ends, the STA 2 sends, over the channel at a moment T2+PIFS, the scheduled deterministic data corresponding to the STA 2.

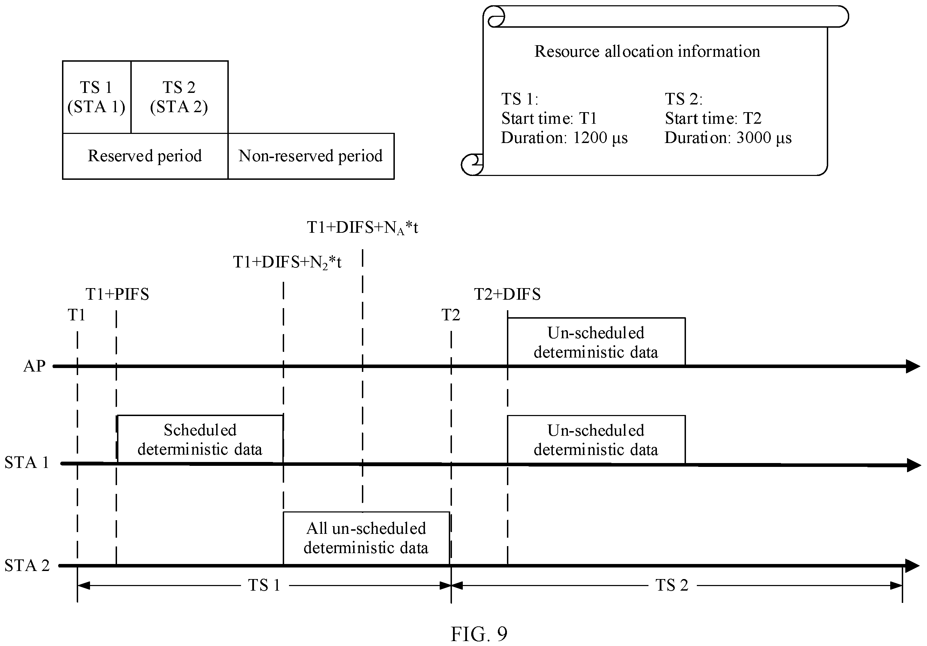

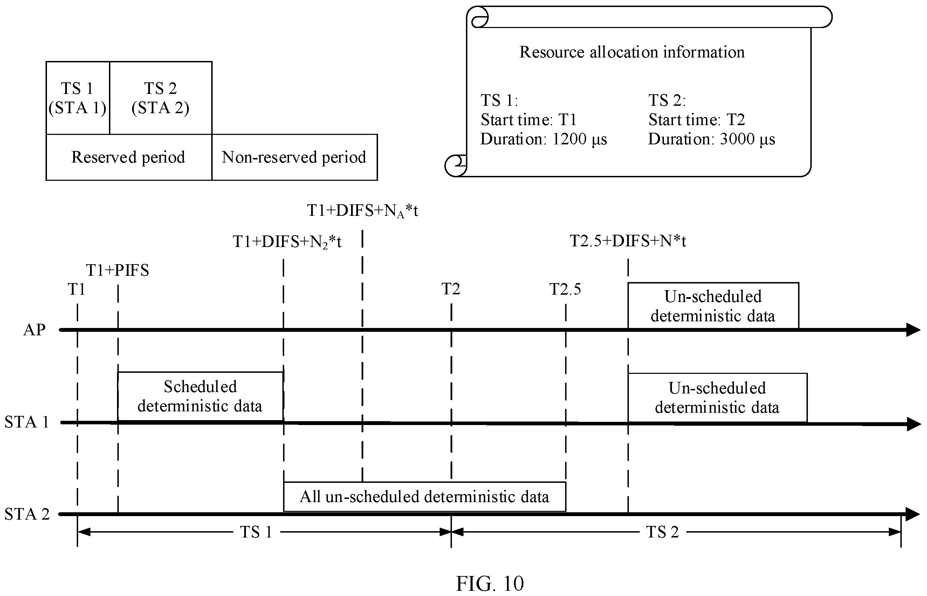

It is assumed that, as shown in FIG. 9 and FIG. 10, the backoff duration of the AP is greater than the backoff duration of the STA 2. To be specific, the STA 2 preempts the channel. Because the TS 2 after the TS 1 is allocated by the AP to the STA 2, the STA 2 may send, over the channel, all un-scheduled deterministic data corresponding to the STA 2. As shown in FIG. 9, if the STA 2 completes sending, at the moment T2, of all the un-scheduled deterministic data corresponding to the STA 2, when detecting, at the start time (namely, the moment T2) of the TS 2, that the channel is idle, the AP and the STA 1 start to wait for the DIFS. After waiting for the DIFS ends, the AP and the STA 1 separately determine the backoff duration of the AP and backoff duration of the STA 1 based on the first backoff window. Then, the AP and the STA 1 continue to detect the channel, and when detecting that the channel is idle, send, over the channel, the un-scheduled deterministic data corresponding to the AP and un-scheduled deterministic data corresponding to the STA 1. As shown in FIG. 10, if the STA 2 does not complete sending, at the moment T2, of all the un-scheduled deterministic data corresponding to the STA 2, the STA 2 continues to send, at the TS 2, the deterministic data corresponding to the STA 2 until the STA 2 completes sending of all the deterministic data corresponding to the STA 2. It is assumed that the STA 2 completes sending, at a moment T2.5, of all the deterministic data corresponding to the STA 2. To be specific, when detecting, at the time T2.5, that the channel is idle, the AP and the STA 1 start to wait for the DIFS. After waiting for the DIFS ends, the AP and the STA 1 separately determine the backoff duration of the AP and the backoff duration of the STA 1 based on the first backoff window. Then, the AP and the STA 1 continue to detect the channel, and when detecting that the channel is idle, send, over the channel, the un-scheduled deterministic data corresponding to the AP and the STA 1.

It should be noted that a device in the AP and the at least one STA serves as a sending end, and sends the data to a receiving end over the channel. After receiving the data sent by the sending end, the receiving end sends an acknowledgment (acknowledgment, ACK) message to the sending end. If the sending end can receive the ACK message, it indicates that the data is normally reached the receiving end, that is, data sending is completed. If the sending end does not receive the ACK message, it indicates that the data fails to be sent, and the sending end resends the data after waiting for a period.

In this embodiment of this application, channel access time is divided into a plurality of access cycles, and each access cycle includes one reserved period. In this way, the AP may select the first period from the reserved period of the current access cycle, and allocate the first period to the first device, so that the first device can send the data in the first period. In addition, because the resource allocation information indicates the start time of the first period, after obtaining the resource allocation information, the first device may start to wait for the first duration at the first time, and after the waiting for the first duration, directly send the first data over the channel without randomly determining the backoff duration based on the backoff window corresponding to the first device. In this way, it can be ensured that the first device can send, over the channel in time, the data that needs to be sent in the specific time, namely, the deterministic data. In addition, when the first period is not used up or the first device has no deterministic data, another device having the deterministic data may preferably preempt the channel, and send, over the channel, the deterministic data corresponding to the device. In this case, the reserved period included in the current access cycle may be fully used, to avoid a waste of the reserved period.

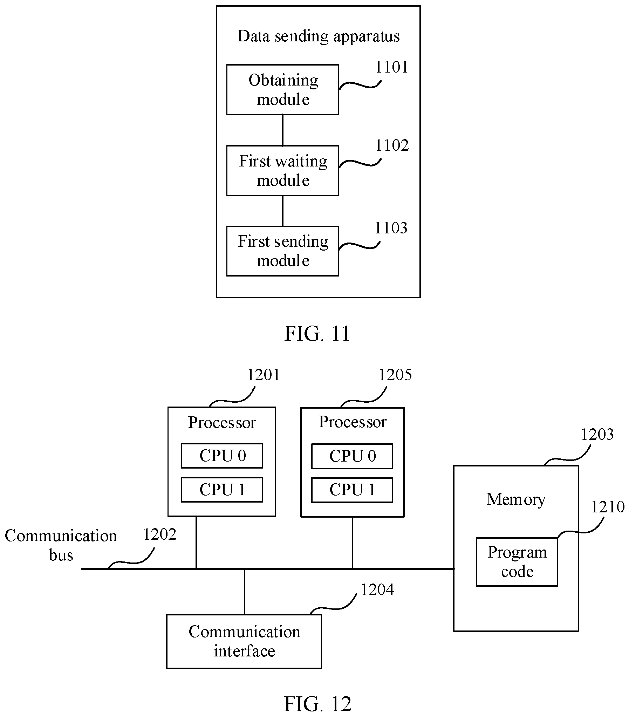

FIG. 11 is a diagram of a structure of a data sending apparatus according to an embodiment of this application. The data sending apparatus may be implemented as a part or all of a first device by software, hardware, or a combination thereof. The first device is one device in an AP and at least one STA. Refer to FIG. 11. The apparatus includes an obtaining module 1101, a first waiting module 1102, and a first sending module 403.

The obtaining module 1101 is configured to obtain resource allocation information of a current access cycle, where the resource allocation information indicates start time and duration of a first period, the first period is a period allocated by the AP to the first device, the first period is in a reserved period of the current access cycle, and the first device is the device in the AP and the at least one STA. For a detailed implementation process, refer to corresponding content in the foregoing embodiments. Details are not described herein again.

The first waiting module 1102 is configured to: when detecting, at first time, that a channel is idle, start to wait for first duration, where the first time is determined based on a quantity of periods indicated by the resource allocation information and the start time of the first period. For a detailed implementation process, refer to corresponding content in the foregoing embodiments. Details are not described herein again.

The first sending module 1103 is configured to: after the first duration ends, send first data over the channel, where the first data is data that needs to be sent by the first device in specific time. For a detailed implementation process, refer to corresponding content in the foregoing embodiments. Details are not described herein again.

Optionally, the resource allocation information further indicates start time and duration of a second period, the second period is a period allocated by the AP to a second device, the second period is in the reserved period of the current access cycle, and the second device is a device other than the first device in the AP and the at least one STA; and the apparatus further includes:
a second waiting module, configured to: when detecting, at second time, that the channel is idle, start to wait for second duration, where the second time is in the second period;
a first determining module, configured to: after the second duration ends, determine backoff duration, and start timing of the backoff duration; and
a second sending module, configured to: when the timing of the backoff duration ends, but end time of the second period is not reached, send second data over the channel, where the second duration is greater than the first duration.

Optionally, the first determining module is specifically configured to:
when the second data is the data that needs to be sent by the first device in the specific time, determine the backoff duration based on a first backoff window; or
when the second data is data that does not need to be sent by the first device in the specific time, determine the backoff duration based on a second backoff window, where
a maximum value of the first backoff window is less than a minimum value of the second backoff window.

Optionally, the reserved period of the current access cycle further includes a third period after the second period, the third period is a period allocated by the AP to a third device, and the third device is a device other than the first device and the second device in the AP and the at least one STA; and the apparatus further includes:
a second determining module, configured to determine remaining duration of the second period, where the remaining duration is duration from time at which the timing of the backoff duration ends to start time of the third period; and
a third determining module, configured to determine the second data from to-be-sent data, where sending duration occupied by the second data is less than the remaining duration.

Optionally, the second time is the start time of the second period, or the second time is any time after the start time of the second period.

Optionally, the first device is a STA in the at least one STA; and the obtaining module 1101 is specifically configured to:
send a resource allocation request to the AP, where the resource allocation request carries a feature of the first data; and
receive the resource allocation information sent by the AP.

Optionally, the first device is a STA in the at least one STA; and the apparatus further includes:
a first receiving module, configured to receive a target channel preemption parameter sent by the AP, where the target channel preemption parameter includes the first duration, the second duration, and a minimum value and the maximum value of the first backoff window.

Optionally, the first device is the AP; and the apparatus further includes:
a second receiving module, configured to receive a resource allocation request sent by a first STA, where the resource allocation request carries a feature of third data, the third data is data to be sent by the first STA, the third data is data that needs to be sent by the first STA in specific time, and the first STA is a STA in the at least one STA;
an allocation module, configured to allocate a period to the first STA in the reserved period of the current access cycle based on receiving time of the resource allocation request and the feature of the third data; and
a third sending module, configured to send resource allocation information to the first STA, where the resource allocation information indicates start time and duration of the period allocated by the AP to the first STA.

In this embodiment of this application, channel access time is divided into a plurality of access cycles, and each access cycle includes one reserved period. In this way, the AP may select the first period from the reserved period of the current access cycle, and allocate the first period to the first device, so that the first device can send the data in the first period. In addition, because the resource allocation information indicates the start time of the first period, after obtaining the resource allocation information, the first device may start to wait for the first duration at the first time, and after the waiting for the first duration, directly send the first data over the channel without randomly determining the backoff duration based on the backoff window corresponding to the first device. In this way, it can be ensured that the first device can send, over the channel in time, the data that needs to be sent in the specific time, namely, the deterministic data. In addition, when the first period is not used up or the first device has no deterministic data, another device having the deterministic data may preferably preempt the channel, and send, over the channel, the deterministic data corresponding to the device. In this case, the reserved period included in the current access cycle may be fully used, to avoid a waste of the reserved period.

It should be noted that when the data sending apparatus provided in the foregoing embodiments sends data, division into the foregoing functional modules is merely used as an example for description. In actual application, the foregoing functions can be allocated to different functional modules and implemented based on a requirement, that is, an inner structure of the apparatus is divided into different functional modules to implement all or some of the functions described above. In addition, the data sending apparatus provided in the foregoing embodiments belongs to a same concept as the data sending method embodiment. For a specific implementation process, refer to the method embodiment. Details are not described herein again.

FIG. 12 is a diagram of a structure of a computer device according to an embodiment of this application, and the computer device may be the STA 102 shown in FIG. 1. The computer device includes at least one processor 1201, a communication bus 1202, a memory 1203, and at least one communication interface 1204.

The processor 1201 may be a general-purpose central processing unit (central processing unit, CPU), a network processor (network processor, NP), a microprocessor, or may be one or more integrated circuits configured to implement the solutions of this application, for example, an application-specific integrated circuit (application-specific integrated circuit, ASIC), a programmable logic device (programmable logic device, PLD), or a combination thereof. The PLD may be a complex programmable logic device (complex programmable logic device, CPLD), a field programmable gate array (field programmable gate array, FPGA), generic array logic (generic array logic, GAL), or any combination thereof.

The communication bus 1202 is configured to transmit information between the components. The communication bus 1202 may be classified into an address bus, a data bus, a control bus, or the like. For ease of representation, only one thick line indicates the bus in the figure, but this does not mean that there is only one bus or only one type of bus.

The memory 1203 may be a read-only memory (read-only memory, ROM), a random access memory (random access memory, RAM), an electrically erasable programmable read-only memory (electrically erasable programmable read-only memory, EEPROM), an optical disc (including a compact disc read-only memory (compact disc read-only memory, CD-ROM), a compact disc, a laser disc, a digital versatile disc, a Blu-ray disc, and the like), a magnetic disk storage medium, another magnetic storage device, or any other medium that can be used to carry or store expected program code in a form of instructions or a data structure and that can be accessed by a computer. However, the memory 1203 is not limited thereto. The memory 1203 may exist independently, and is connected to the processor 1201 through the communication bus 1202. The memory 1203 may be alternatively integrated with the processor 1201.

The communication interface 1204 is configured to communicate with another device or a communication network by using any apparatus like a transceiver. The communication interface 1204 includes a wired communication interface, or may include a wireless communication interface. The wired communication interface may be, for example, an Ethernet interface. The Ethernet interface may be an optical interface, an electrical interface, or a combination thereof. The wireless communication interface may be a wireless local area network (wireless local area network, WLAN) interface, a cellular network communication interface, a combination thereof, or the like.

In specific implementation, in an embodiment, the computer device may include a plurality of processors, for example, the processor 1201 and a processor 1205 shown in FIG. 12. Each of the processors may be a single-core processor, or may be a multi-core processor. The processor herein may be one or more devices, circuits, and/or processing cores configured to process data (for example, computer program instructions).

In specific implementation, in an embodiment, the computer device may further include an output device 1206 and an input device 1207. The output device 1206 communicates with the processor 1201, and may display information in a plurality of manners. For example, the output device 1206 may be a liquid crystal display (liquid crystal display, LCD), a light emitting diode (light-emitting diode, LED) display device, a cathode ray tube (cathode ray tube, CRT) display device, a projector (projector), or the like. The input device 1207 communicates with the processor 1201, and may receive an input of a user in a plurality of manners. For example, the input device 1207 may be a mouse, a keyboard, a touchscreen device, a sensor device, or the like.

In some embodiments, the memory 1203 is configured to store program code 1210 for performing the solutions of this application, and the processor 1201 may execute the program code 1210 stored in the memory 1203. The program code 1210 may include one or more software modules. The computer device may implement, by using the processor 1201 and the program code 1210 in the memory 1203, the data sending method provided in the embodiment in FIG. 3.

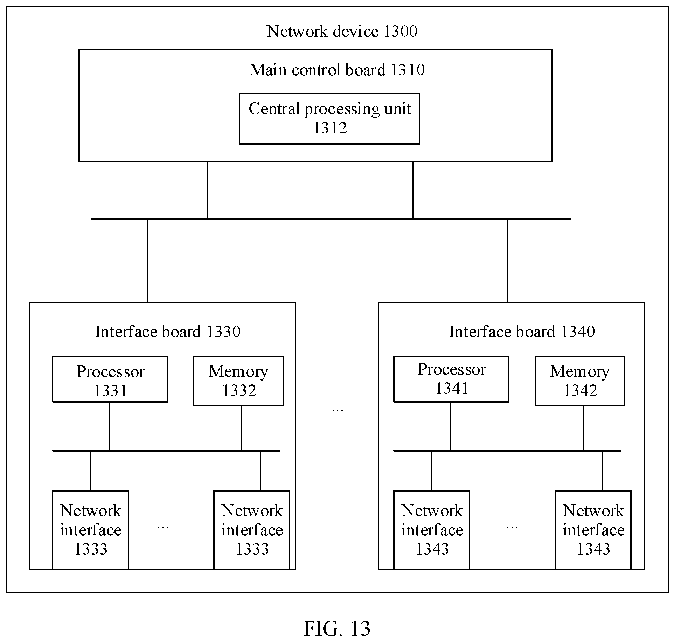

FIG. 13 is a diagram of a structure of a network device according to an embodiment of this application, and the network device may be the AP 101 shown in FIG. 1. In this embodiment, the network device 1300 includes a main control board 1310, an interface board 1330, and an interface board 1340. When the network device 1300 includes a plurality of interface boards, the network device 1300 may further include a switching board (not shown in the figure). The switching board is configured to complete data exchange between the interface boards (the interface board is also referred to as a line card or a service board).

The main control board 1310 is configured to complete functions such as system management, device maintenance, and protocol processing. The interface board 1330 and the interface board 1340 are configured to provide one or more network interfaces, for example, an Ethernet (Ethernet) interface, a fast Ethernet (fast Ethernet, FE) interface, or a gigabit Ethernet (gigabit Ethernet, GE) interface, and implement data sending through these interfaces. The main control board 1310, the interface board 1330, and the interface board 1340 are connected to a system backboard through a system bus to implement interworking. The interface board 1330 includes one or more processors 1331. The processor 1331 is configured to: control and manage the interface board, communicate with a central processing unit on the main control board, and send data. A memory 1332 on the interface board 1330 is configured to store resource allocation information, and the processor 1331 sends data based on the resource allocation information stored in the memory 1332. For a data sending process, refer to the descriptions in the foregoing embodiments. Details are not described herein again.

It may be understood that, as shown in FIG. 13, this embodiment includes a plurality of interface boards, and uses a distributed forwarding mechanism. In this mechanism, operations on the interface board 1340 are basically similar to operations on the interface board 1330. For brevity, details are not described. In addition, it may be understood that the processor 1331 and/or a processor 1341 on the interface board 1330 in FIG. 13 may be dedicated hardware or a chip, for example, a network processor or an application-specific integrated circuit (application-specific integrated circuit), to implement the foregoing functions. This implementation is usually referred to as a manner of using dedicated hardware or a chip for processing on a forwarding plane. In another implementation, the processor 1331 and/or the processor 1341 may alternatively be a general-purpose processor, for example, a general-purpose CPU, to implement the foregoing functions.

In addition, it should be noted that, there may be one or more main control boards. When there are a plurality of main control boards, the main control boards may include an active main control board and a standby main control board. There may be one or more interface boards, and the device with a stronger data processing capability provides more interface boards. In a case of a plurality of interface boards, the plurality of interface boards may communicate with each other through one or more switching boards, and load sharing and redundancy backup may be implemented by the plurality of interface boards together. In a centralized forwarding architecture, the device may not need a switching board, and the interface board provides a function of processing service data of an entire system. In a distributed forwarding architecture, the device includes a plurality of interface boards, and may implement data exchange between the plurality of interface boards through the switching board, to provide a large-capacity data exchange and processing capability. Therefore, a data access and processing capability of the network device in the distributed architecture is greater than that of the device in the centralized architecture. A specific architecture that is to be used depends on a specific networking deployment scenario. This is not limited herein.

In a specific embodiment, the memory 1332 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another disc storage, an optical disc storage (including a compact disc, a laser disc, an optical disc, a digital versatile disc, a Blu-ray disc, and the like), a magnetic disk or another magnetic storage device, or any other medium that can be used to carry or store expected program code in a form of instructions or a data structure and that can be accessed by a computer. However, the memory 1332 is not limited thereto. The memory 1332 may exist independently, and is connected to the processor 1331 through a communication bus. The memory 1332 may alternatively be integrated with the processor 1331.

The memory 1332 is configured to store program code for executing the solutions of this application. The processor 1331 may execute the program code stored in the memory 1332 to control execution, to implement the data sending method provided in the foregoing embodiments. The program code stored in the memory 1332 may include one or more software modules. The one or more software modules may be software modules provided in the foregoing embodiments.

All or some of the foregoing embodiments may be implemented by software, hardware, firmware, or any combination thereof. When software is used to implement embodiments, all or some embodiments may be implemented in a form of a computer program product. The computer program product includes one or more computer instructions. When the computer instructions are loaded and executed on the computer, the procedures or functions according to embodiments of this application are all or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk drive, or a magnetic tape), an optical medium (for example, a digital versatile disc (digital versatile disc, DVD)), a semiconductor medium (for example, a solid-state drive (solid-state drive, SSD)), or the like. It should be noted that the computer-readable storage medium mentioned in embodiments of this application may be a nonvolatile storage medium, that is, may be a non-transitory storage medium.

It should be understood that "a plurality of" in this specification means two or more. In descriptions of embodiments of this application, unless otherwise specified, "/" means "or". For example, A/B may indicate A or B. A term "and/or" in this specification is merely an association relationship for describing associated objects, and indicates that three relationships may exist. For example, A and/or B may indicate the following three cases: Only A exists, both A and B exist, and only B exists. In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference.

It should be noted that information (including but not limited to user equipment information, personal information of a user, and the like), data (including but not limited to data used for analysis, stored data, displayed data, and the like), and signals in embodiments of this application are all used under authorization by the user or full authorization by all parties, and collection, use, and processing of related data need to conform to related laws, regulations, and standards of related countries and regions. For example, all the resource allocation information in embodiments of this application is obtained with sufficient authorization.

The foregoing descriptions are merely example embodiments of this application, but are not intended to limit this application. Any modification, equivalent replacement, or improvement made without departing from the spirit and principle of this application should fall within the protection scope of this application.

## Claims

1. A data sending method, applied to a wireless communication system, wherein the wireless communication system comprises one access point AP and at least one station STA, channel access time of the wireless communication system comprises a plurality of access cycles, and each access cycle comprises one reserved period; and the method comprises:
obtaining, by a first device, resource allocation information of a current access cycle, wherein the resource allocation information indicates start time and duration of a first period, the first period is a period allocated by the AP to the first device, the first period is in a reserved period of the current access cycle, and the first device is a device in the AP and the at least one STA;
when detecting, at first time, that a channel is idle, starting, by the first device, to wait for first duration, wherein the first time is determined based on a quantity of periods indicated by the resource allocation information and the start time of the first period; and
after the first duration ends, sending, by the first device, first data over the channel, wherein the first data is data that needs to be sent by the first device in specific time.

2. The method according to claim 1, wherein the resource allocation information further indicates start time and duration of a second period, the second period is a period allocated by the AP to a second device, the second period is in the reserved period of the current access cycle, and the second device is a device other than the first device in the AP and the at least one STA; and the method further comprises:
when detecting, at second time, that the channel is idle, starting, by the first device, to wait for second duration, wherein the second time is in the second period;
after the second duration ends, determining, by the first device, backoff duration, and starting timing of the backoff duration; and
when the timing of the backoff duration ends, but end time of the second period is not reached, sending, by the first device, second data over the channel, wherein the second duration is greater than the first duration.

3. The method according to claim 2, wherein the determining, by the first device, backoff duration comprises:
when the second data is the data that needs to be sent by the first device in the specific time, determining, by the first device, the backoff duration based on a first backoff window; or
when the second data is data that does not need to be sent by the first device in the specific time, determining, by the first device, the backoff duration based on a second backoff window, wherein
a maximum value of the first backoff window is less than a minimum value of the second backoff window.

4. The method according to claim 2 or 3, wherein the reserved period of the current access cycle further comprises a third period after the second period, the third period is a period allocated by the AP to a third device, and the third device is a device other than the first device and the second device in the AP and the at least one STA; and before the sending, by the first device, second data over the channel, the method further comprises:
determining, by the first device, remaining duration of the second period, wherein the remaining duration is duration from time at which the timing of the backoff duration ends to start time of the third period; and
determining, by the first device, the second data from to-be-sent data, wherein sending duration occupied by the second data is less than the remaining duration.

5. The method according to any one of claims 2 to 4, wherein the second time is the start time of the second period, or the second time is any time after the start time of the second period.

6. The method according to claim 1, wherein the first device is a STA in the at least one STA; and the obtaining, by a first device, resource allocation information of a current access cycle comprises:
sending, by the first device, a resource allocation request to the AP, wherein the resource allocation request carries a feature of the first data; and
receiving, by the first device, the resource allocation information sent by the AP.

7. The method according to claim 1, wherein the first device is a STA in the at least one STA; and the method further comprises:
receiving, by the first device, a target channel preemption parameter sent by the AP, wherein the target channel preemption parameter comprises the first duration, second duration, and a minimum value and a maximum value of a first backoff window.

8. The method according to claim 1, wherein the first device is the AP; and the method further comprises:
receiving, by the first device, a resource allocation request sent by a first STA, wherein the resource allocation request carries a feature of third data, the third data is data to be sent by the first STA, the third data is data that needs to be sent by the first STA in specific time, and the first STA is a STA in the at least one STA;
allocating, by the first device, a period to the first STA in the reserved period of the current access cycle based on receiving time of the resource allocation request and the feature of the third data; and
sending, by the first device, resource allocation information to the first STA, wherein the resource allocation information indicates start time and duration of the period allocated by the AP to the first STA.

9. A data sending apparatus, applied to a wireless communication system, wherein the wireless communication system comprises one access point AP and at least one station STA, channel access time of the wireless communication system comprises a plurality of access cycles, and each access cycle comprises one reserved period; and the apparatus comprises:
an obtaining module, configured to obtain resource allocation information of a current access cycle, wherein the resource allocation information indicates start time and duration of a first period, the first period is a period allocated by the AP to a first device, the first period is in a reserved period of the current access cycle, and the first device is a device in the AP and the at least one STA;
a first waiting module, configured to: when detecting, at first time, that a channel is idle, start to wait for first duration, wherein the first time is determined based on a quantity of periods indicated by the resource allocation information and the start time of the first period; and
a first sending module, configured to: after the first duration ends, send first data over the channel, wherein the first data is data that needs to be sent by the first device in specific time.

10. The apparatus according to claim 9, wherein the resource allocation information further indicates start time and duration of a second period, the second period is a period allocated by the AP to a second device, the second period is in the reserved period of the current access cycle, and the second device is a device other than the first device in the AP and the at least one STA; and the apparatus further comprises:
a second waiting module, configured to: when detecting, at second time, that the channel is idle, start to wait for second duration, wherein the second time is in the second period;
a first determining module, configured to: after the second duration ends, determine backoff duration, and start timing of the backoff duration; and
a second sending module, configured to: when the timing of the backoff duration ends, but end time of the second period is not reached, send second data over the channel, wherein the second duration is greater than the first duration.

11. The apparatus according to claim 10, wherein the first determining module is specifically configured to:
when the second data is the data that needs to be sent by the first device in the specific time, determine the backoff duration based on a first backoff window; or
when the second data is data that does not need to be sent by the first device in the specific time, determine the backoff duration based on a second backoff window, wherein
a maximum value of the first backoff window is less than a minimum value of the second backoff window.

12. The apparatus according to claim 10 or 11, wherein the reserved period of the current access cycle further comprises a third period after the second period, the third period is a period allocated by the AP to a third device, and the third device is a device other than the first device and the second device in the AP and the at least one STA; and the apparatus further comprises:
a second determining module, configured to determine remaining duration of the second period, wherein the remaining duration is duration from time at which the timing of the backoff duration ends to start time of the third period; and
a third determining module, configured to determine the second data from to-be-sent data, wherein sending duration occupied by the second data is less than the remaining duration.

13. The apparatus according to any one of claims 10 to 12, wherein the second time is the start time of the second period, or the second time is any time after the start time of the second period.

14. The apparatus according to claim 9, wherein the first device is a STA in the at least one STA; and the obtaining module is specifically configured to:
send a resource allocation request to the AP, wherein the resource allocation request carries a feature of the first data; and
receive the resource allocation information sent by the AP.

15. The apparatus according to claim 9, wherein the first device is a STA in the at least one STA; and the apparatus further comprises:
a first receiving module, configured to receive a target channel preemption parameter sent by the AP, wherein the target channel preemption parameter comprises the first duration, second duration, and a minimum value and a maximum value of a first backoff window.

16. The apparatus according to claim 9, wherein the first device is the AP; and the apparatus further comprises:
a second receiving module, configured to receive a resource allocation request sent by a first STA, wherein the resource allocation request carries a feature of third data, the third data is data to be sent by the first STA, the third data is data that needs to be sent by the first STA in specific time, and the first STA is a STA in the at least one STA;
an allocation module, configured to allocate a period to the first STA in the reserved period of the current access cycle based on receiving time of the resource allocation request and the feature of the third data; and
a third sending module, configured to send resource allocation information to the first STA, wherein the resource allocation information indicates start time and duration of the period allocated by the AP to the first STA.

17. A computer device, wherein the computer device comprises a memory and a processor, the memory is configured to store a computer program, and the processor is configured to execute the computer program stored in the memory, to implement steps of the method according to any one of claims 1 to 8.

18. A computer-readable storage medium, wherein the storage medium stores instructions, and when the instructions are run on a computer, the computer is enabled to perform steps of the method according to any one of claims 1 to 8.

19. A computer program, wherein the computer program comprises instructions, and when the instructions are run on a computer, the computer is enabled to perform steps of the method according to any one of claims 1 to 8.
